# EUROPEAN PATENT APPLICATION

(11) **EP 4 592 936 A1**
(43) Date of publication of application: **30.07.2025**
(21) Application number: 23868527.5
(22) Date of filing: 18.09.2023
(51) Int. Cl.: G06Q 50/00, G06F 16/9535, H04L 65/1093, H04N 21/4788, H04N 7/14

(54) **DEVICE FOR PROVIDING INFORMATION RELATED TO LIVE BROADCAST AND METHOD THEREFOR**

(30) Priority: 19.09.2022 KR 20220117950; 14.09.2023 KR 20230122410
(71) Applicant: Hyperconnect LLC, Seoul 06164 (KR)
(72) Inventor: KIM, Sung Ho, Seoul 06164 (KR); PARK, Joon Il, Seoul 06164 (KR); SEO, Tae Young, Seoul 06164 (KR); LEE, Seong Hyuk, Seoul 06164 (KR); YOON, Sang Pil, Seoul 06164 (KR)
(74) Representative: Haseltine Lake Kempner LLP
(86) International application number: PCT/KR2023/014057
(87) International publication number: WO 2024/063475

(57) **Abstract**

The present invention discloses a method of providing information in a terminal of a user, comprising: a step in which an input is obtained requesting to use a matching service for matching with another person; a step in which it is checked whether to provide a live broadcast participation service to the user in response to the input requesting to use the matching service; and a step in which, if it is confirmed to provide the live broadcast participation service to the user, information is provided to the user related to participation in a live broadcast; and a step in which one or more items of content associated with the user are provided to a viewer of a live broadcast room in which the user participates.

## Description

### [Technical Field]

The present invention relates to a device for providing information related to a live broadcast, and to a method for the same. More specifically, the present invention relates to a terminal of a user that checks whether to provide a live broadcast participation service to a user that has requested to use a matching service, and if it is confirmed to provide the live broadcast participation service, provides information to the user related to live broadcast participation and provides one or more items of content associated with the user to a viewer of a live broadcast room in which the user is participating.

### [Background Art]

As electronic technology advances, terminals such as smartphones and tablet PCs are becoming more widespread. Such high-performance terminals can support functionality such as photography, playback, and communication with other terminals; based on such functionality, users can chat and make video calls using their own terminals, and personal broadcasting in the form of a plurality of users viewing a broadcast streamed by a particular user is also becoming more widespread.

In the case of chat services, it may be difficult to provide a satisfactory experience to all users due to such problems as gender imbalance; in order to reduce user dissatisfaction related to this and prevent users from leaving the service, there is a need to propose a method of improving user experience.

In this regard, reference can be made to prior art references such as KR102044241B1, KR20020017111A, and the like.

### [Detailed Description of Invention]

### [Technical Problem to be Solved]

The problem to be solved by the present embodiment is to provide a terminal of a user and a method for the same, in which: input is obtained requesting to use a matching service for matching with another person; in response to the input requesting to use the matching service, it is checked whether to provide a live broadcast participation service to the user that has requested to use the matching service, and if it is confirmed to provide the live broadcast participation service, information is provided to the user related to live broadcast participation and one or more items of content associated with the user are provided to a viewer of a live broadcast room in which the user is participating.

Another problem to be solved by the present embodiment is to provide a method of operating a server, in which: in relation to a user who requests to use a matching service for matching with another person, it is checked whether to provide a live broadcast participation service to the user; and, if it is confirmed to provide the live broadcast participation service to the user, information is obtained about one or more live broadcast rooms that provide the user an opportunity to participate; and, in relation to one or more hosts corresponding to one or more live broadcast rooms, information about the user is provided to at least some terminals of the one or more hosts.

The technical problems to be solved by the present embodiment are not limited to the technical problems set forth above; further technical problems can be inferred from the embodiments below.

### [Means of Solving the Problem]

The method of providing information from a terminal of a user according to one embodiment comprises: a step in which an input is obtained requesting to use a matching service for matching with another person; a step in which, in response to the input requesting to use the matching service, it is checked whether to provide a live broadcast participation service to the user; and if it is confirmed to provide the live broadcast participation service, a step in which information is provided to the user related to live broadcast participation; and a step in which one or more items of content associated with the user are provided to a viewer of a live broadcast room in which the user is participating.

According to one embodiment, the step in which it is checked whether to provide the live broadcast participation service to the user comprises a step in which information is obtained from a server indicating whether to provide the live broadcast participation service to the user; in the server, one or more pieces of information related to the user are checked, and based on the one or more pieces of information, it may be decided whether to provide the live broadcast participation service to the user.

According to one embodiment, the one or more pieces of information related to the user may comprise one or more of: information indicating the user's preference related to the provision of the live broadcast participation service, and information about the user's history of attempting to match with another user.

According to one embodiment, information indicating the user's preference may be obtained based on one or more of: history information related to cases in which the live broadcast participation service was previously provided to the user; and history information related to cases in which it was previously attempted to provide the live broadcast participation service to the user.

According to one embodiment, the information related to participating in the live broadcast may comprise one or more of: information about one or more live broadcast rooms that provide the user an opportunity to participate; and information about the user's wait for the one or more live broadcast rooms.

According to one embodiment, the server may check a filter condition that is set for a person requesting to use a broadcast room for each of a plurality of live broadcast rooms in relation to participation in the broadcast room by a person requesting to use the matching service, and based on the filter condition, the server may decide on one or more live broadcast rooms from among the plurality of live broadcast rooms.

According to one embodiment, the filter condition may comprise one or more of: whether the person requesting to use the matching service is allowed to participate in the live broadcast room; and a condition that the person requesting to use the matching service must satisfy in order to participate in the live broadcast room.

According to one embodiment, the host of the live broadcast room may be provided with the functionality to set the filter condition in exchange for payment.

According to one embodiment, the waiting information of the user may be obtained from the server based on at least some of: the user's priority in relation to participating in the one or more live broadcast rooms; the priority of another person requesting to use the matching service; and the priority of a viewer of the one or more live broadcasts.

According to one embodiment, assuming the user is a viewer of the one or more live broadcast rooms, the user's priority may be determined by the server based on a logic for selecting a broadcast participant from among the viewers.

According to one embodiment, with respect to a particular live broadcast room comprised in the one or more live broadcast rooms, if there are a plurality of participation slots associated with the particular live broadcast room, some of the plurality of participation slots may be allocated for participation by a person requesting to use the matching service, and the remainder may be allocated for participation by a viewer of the particular live broadcast room.

According to one embodiment, the step in which information related to participating in the live broadcast is provided may comprise a step in which functionality is provided for interacting with a host of the one or more live broadcast rooms.

According to one embodiment, in relation to one or more live broadcast rooms that provide the user an opportunity to participate, assuming that one or more hosts corresponding to each of the one or more live broadcast rooms request to use the matching service, a matching suitability between the user and the one or more hosts is determined by a server based on the matching logic of the matching service, and based on the matching suitability, the server may decide on a live broadcast room in which the user will participate.

According to one embodiment, if information indicating that the user's participation in the live broadcast is not permitted is obtained during the user's participation in a live broadcast, the method of providing information may further comprise a step in which the provision of at least some of the information related to participation in the live broadcast is stopped.

According to one embodiment, if the user is participating in a live broadcast, the method of providing information may further comprise a step in which one or more pieces of information related to the user's live broadcast participation are recorded.

According to one embodiment, if the user is participating in a live broadcast, at least some of the one or more contents may be provided to viewers of the live broadcast room in an altered form.

According to one embodiment, if a set condition is satisfied, the alteration is removed, and the one or more contents that have not been altered are provided to viewers of the live broadcast room; the set condition may comprise one or more of: whether there is an explicit request from the user, whether the viewer satisfies a set criterion, and whether another person who has participated in the live room satisfies a set criterion.

The terminal of a user that provides information according to one embodiment comprises: a transceiver, a memory that stores commands, and a processor; the processor is connected to the transceiver and the memory, and obtains input requesting to use a matching service for matching with another person; in response to the input requesting to use the matching service, checks whether to provide a live broadcast participation service to the user; and if it is confirmed to provide the live broadcast participation service; provides information to the user related to participation in the live broadcast, and provides one or more items of content associated with the user to a viewer of a live broadcast room in which the user is participating.

The method of providing information from a server according to one embodiment comprises: a step in which, in relation to a user requesting to use a matching service for matching with another person, it is checked whether to provide a live broadcast participation service to the user; a step in which, if it is confirmed to provide the live broadcast participation service to the user, information is obtained about one or more live broadcast rooms that provide an opportunity to participate to the user; and a step in which, in relation to one or more hosts corresponding to one or more live broadcast rooms, information about the user is provided to at least some terminals of the one or more hosts.

According to one embodiment, the method of providing information from a terminal of a host comprises: a step in which: with respect to a user requesting to use a matching service for matching with another person, it is checked whether the user will be provided an opportunity to participate in a live broadcast room of the host; a step in which, if it is confirmed that the user will be provided an opportunity to participate in the live broadcast room of the host, a priority of the user is checked with respect to participating in the live broadcast room of the host; a step in which, based on the priority, it is determined whether the user will participate in the live broadcast room; and a step in which, if the user participates in the live broadcast room, one or more items of content associated with the user are provided to a viewer of the live broadcast room.

Specifics of other embodiments are included in the detailed description and drawings.

### [Effect of Invention]

According to the present invention, a device and a method of providing information related to a live broadcast can reduce user dissatisfaction and prevent a user from leaving a service in circumstances in which matching with a desired counterpart is difficult.

In addition, according to the present invention, traffic load can be distributed and reduced by guiding users to a live broadcast service with a comparatively low traffic load compared to the matching service.

The effects of the invention are not limited to the effects mentioned above; further effects not mentioned will be plainly apparent to a person of ordinary skill in the art based on what is recited in the claims.

### [Brief Description of the Drawings]

FIG. 1 is a schematic drawing showing a system that provides information related to a live broadcast according to one embodiment.
FIG. 2 is an operation flowchart illustrating a method by which a a terminal of a user provides information related to a live broadcast according to one embodiment.
FIG. 3 is an operation flowchart illustrating a method according to one embodiment, whereby a server according to one embodiment provides information about a user to at least some of the terminals of one or more hosts of the user.
FIG. 4 is an operation flowchart illustrating a method according to one embodiment, of deciding, based on a filter condition, on one or more live broadcast rooms in which a server provides a user an opportunity to participate.
FIG. 5 is an operation flowchart illustrating a method according to one embodiment, whereby information is provided on a terminal of a host.
FIG. 6 is a drawing illustrating an example of a screen that provides a live broadcast participation service to a user requesting to use a matching service according to one embodiment.
FIG. 7 is a drawing illustrating another example of a screen that provides a live broadcast participation service to a user requesting to use a matching service according to one embodiment.
FIG. 8 is a drawing illustrating, by way of example, a case in which an alteration of one or more contents associated with a user is removed and the content is provided to viewers of a live broadcast room, according to one embodiment.
FIG. 9 is a drawing illustrating, by way of example, a case in which there are a plurality of participation slots in a live broadcast room, according to one embodiment.
FIG. 10 is a drawing illustrating, by way of example, a case in which information indicating that a user's participation in a live broadcast is not permitted is obtained while the user is participating in the live broadcast, according to one embodiment.
FIG. 11 is an exemplary drawing of a configuration of a terminal of a user according to one embodiment.

### [Best Mode of Implementing the Invention]

The terms used in the embodiments have been selected from conventionally used terms as much as possible considering the functions of the present invention, but this may vary depending on the intent or precedents of technicians working in the field, the emergence of new technologies, and the like. Additionally, in some particular cases, terms have been arbitrarily selected by the applicant; in such cases, the meaning thereof will be described in detail in the relevant portion of the description. Therefore, the terms used in the present disclosure must be defined based on the meaning of the terms and the overall content of this disclosure, rather than simply based on the names of the terms.

When a portion of a specification is said to "comprise" a component, this does not mean that it excludes other components, but rather that it may further comprise other components, unless otherwise stated. Additionally, terms such as "... part," "... module," and the like, as set forth in the specification, refer to a unit that processes at least one function or operation, which may be implemented by hardware or software, or a combination of hardware and software.

The expression "at least one of a, b, and c" as used throughout the specification may encompass "only a," "only b," "only c," "a and b," "a and c," "b and c," or "all of a, b, and c."

The "terminal" mentioned below may be implemented as a computer or portable terminal capable of connecting to a server or another terminal via a network. "Computer" in this case may encompass, for example, a notebook, desktop, or laptop on which a web browser is loaded, and "portable terminal" may encompass for example, a wireless communication device that ensures portability and mobility, such as a communication-based terminal such as IMT (International Mobile Telecommunication), CDMA (Code Division Multiple Access), W-CDMA (W-Code Division Multiple Access), LTE (Long Term Evolution), and any sort of handheld-based wireless communication device such as a smartphone, tablet PC, or the like.

Hereinbelow, one embodiment of the present invention will be described in detail, with reference to the attached drawings, so that a person of ordinary skill in the art of the field to which the present invention belongs can readily implement it. However, the present invention is not limited to the embodiment described here, and may be implemented in several different forms.

Hereinbelow, one embodiment of the present invention is described in detail with reference to the attached drawings.

**In** describing the embodiments, the description of technical content will be omitted that is widely known in the technical field to which the present invention belongs and does not have a direct relation to the present invention. This is done in order to omit unnecessary explanation in order to convey the core idea of the present invention more clearly.

For the same reason, some components in the attached drawings are exaggerated, omitted, or shown schematically. Additionally, the size of each component does not wholly reflect its actual size. **In** each drawing, the same reference numbers are assigned to identical or corresponding components.

The advantages and characteristics of the present invention, and the method by which these are achieved, will become clear upon referring to the embodiments described in detail below, in combination with the attached drawings. However, the present invention is not limited to the embodiments set forth below, but can be implemented in various different forms; these embodiments are presented only to complete the disclosure of the present invention, and to fully inform a person of ordinary skill in the art to which the invention pertains of the scope of the invention; the present invention is defined only by the scope of the claims. Throughout the specification, the same reference symbols denote the same components.

Here it will be understood that each block of the processing flowcharts, and combinations of the flowcharts, can be carried out by means of computer program instructions. These computer program instructions may be loaded in a processor of a general-purpose computer, a special-purpose computer, or other programmable data processing device, such that when the processor of the computer or other programmable data processing device executes the instructions, a means is generated for carrying out the functions described in the flowchart block(s). These computer program instructions can also be stored in a computer-usable or computer-readable memory that can direct a computer or other programmable data processing device to implement a function in a particular way; consequently, the instructions stored in the computer-usable or computer-readable memory can also produce an article of manufacture that contains an instruction means for carrying out the function described in the flowchart block(s). Because the computer program instructions can also be loaded in a computer or other programmable data processing device, a series of operational steps can be carried out on the computer or other programmable data processing device to generate a computer-executable process, so that the instructions carried out on the computer or other programmable data processing device can also provide steps for executing the functions described in the flowchart block(s).

In addition, each block may represent a module, segment, or portion of code that comprises one or more executable instructions for executing a particular logical function(s). It should also be noted that in some alternative embodiments, it is possible for the functions mentioned in the blocks to occur out of order. For example, two blocks shown in succession may in fact be executed at substantially the same time, or depending on the respective functions of the blocks, they may sometimes be executed in reverse order.

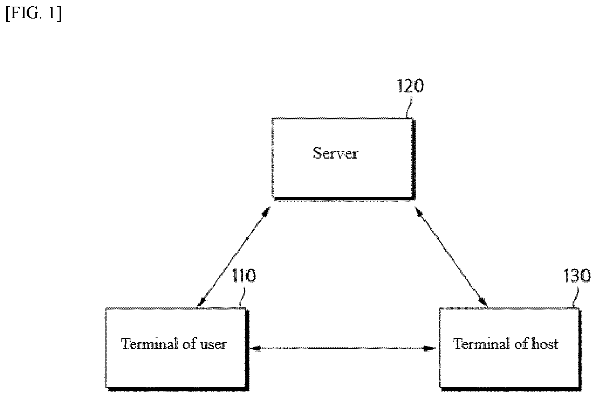

FIG. 1 is a schematic drawing showing a system that provides information related to a live broadcast according to one embodiment.

According to various embodiments, a system that provides information related to a live broadcast comprises a terminal (110) of a user, a server (120), and a terminal (130) of a host. A system that provides information related to a live broadcast according to one embodiment of the present invention may further comprise a network that supports information transmission and reception between at least some of the user's terminal (110), the server (120), the host's terminal (130), and an external device.

The user's terminal (110), the server (120), and the host's terminal (130), in the system that provides information related to the live broadcast, may comprise a transceiver, a memory, and a processor. In addition, each of the user's terminal (110), the server (120), and the host's terminal (130) refers to a respective unit that processes at least one function or operation; this can be implemented by hardware or software, or by a combination of hardware and software. Throughout the embodiment, the user's terminal (110), the server (120), and the host's terminal (130) are mentioned as separate devices and servers, but this may be a logically divided structure and may be implemented by separate functions in a single device or server.

According to one embodiment, the user's terminal (110), the server (120), and the host's terminal (130) may comprise a plurality of computer systems or computer software implemented as network servers. For example, at least some of the user's terminal (110), the server (120), and the host's terminal (130) may be connected to a lower-level device that can communicate with another network server through a computer network such as an intranet or internet, and may refer to a computer system and computer software that receives a request to carry out a task, carries out the task, and provides the outcome of carrying out the task. In addition, at least some of the user's terminal (110), the server (120), and the host's terminal (130) can be understood as a broad concept comprising a series of application programs that can operate on a network server, and various databases built inside the server. For example, at least some of the user's terminal (110), the server (120), and the host's terminal (130) may be implemented using a network server program that is provided in various ways according to operating system such as DOS, Windows, Linux, UNIX, or MacOS.

The user's terminal (110), the server (120), and the host's terminal (130) are referred to as such for convenience of explanation; however, they should be understood as generic electronic devices that: correspond to various types of devices such as computer devices and mobile communication terminals; can comprise various types of devices; or can be comprised within various types of devices.

The user is the entity requesting to use the matching service. The matching service that the user requests to use may comprise various forms thereof, such as random matching, designated partner matching, one-to-one matching, and many-to-one matching, and is not limited to a particular form of the service.

The user's terminal (110) provides one or more functionalities, and/or carries out one or more operations, for providing a matching service and providing a live broadcast participation service. Specifically, the user's terminal (110) obtains an input requesting to use a matching service for matching with another person (hereinafter for convenience of explanation abbreviated as "matching service"); in response to the input requesting to use the matching service, it checks whether to provide a live broadcast participation service to the user. If it is confirmed to provide the live broadcast participation service to the user, the user's terminal (110) provides information to the user related to participating in the live broadcast, and provides one or more items of content associated with the user to viewers of the live broadcast room in which the user is participating. In this regard, the operation of the user's terminal (110) that provides information to the user may comprise outputting information to the user via an output device such as a screen, a speaker, and the like; however, the scope of the present invention is not limited thereto.

The operation of the user's terminal (110) that provides one or more contents to the viewers of the live broadcast room in which the user participates may comprise a case in which the user's terminal (110) provides content to each viewer's terminal, and may also comprise a case in which the user's terminal (110) transmits information to the server (120) or the host's terminal (130), and the server (120) or the host's terminal (130) provides the content to each viewer's terminal. In addition, the case in which the server (120) or the host's terminal (130) provides content to each viewer's terminal, may, in addition to the case in which the server (120) or the host's terminal (130) provides the original content to the viewer's terminal, comprise the case in which the screen is configured to show content received from the user's terminal (110) and provided to each viewer's terminal. In this way, there may be various embodiments related to the operation of the user's terminal (110) whereby one or more contents are provided to viewers of a live broadcast room in which the user is participating.

The server (120) is a device that processes operations for providing various services, such as matching services and live broadcast participation services. For example, the server (120) checks whether to provide a live broadcast participation service to a user requesting to use the matching service; if it is confirmed that the live broadcast participation service will be provided to the user, it obtains information about one or more live broadcast rooms that provide the user an opportunity to participate. In addition, in connection with one or more hosts that each correspond to one or more live broadcast rooms, the server (120) provides user information to at least some of the terminals of one or more hosts (corresponding to the host's terminal (130), described below). According to one embodiment, the operation of the server (120) that provides the user's information to at least some of the terminals of one or more hosts may be associated with the above-mentioned "operation of the user's terminal (110) whereby one or more contents are provided to viewers of a live broadcast room in which the user is participating."

Moreover, there may be various embodiments related to operations carried out by the server (120), such as according to one embodiment the server (120) being able to obtain waiting information of the user based on priority information.

A host is an entity that provides a live broadcast. Providing a live broadcast may encompass, but is not necessarily limited to, streaming a live broadcast in real time, and there may for example be various embodiments, such as providing pre-produced broadcast content in the form of a real-time transmission.

One or more hosts can provide a broadcast using their respective terminals. For convenience, hereinafter the terminals of one or more hosts are referred to as the host terminal (130). The operation described as being carried out by the host's terminal (130) can be understood as an operation carried out by "at least some of the terminals of one or more hosts," and the information transmitted and received by the host's terminal (130) can be understood as information transmitted and received by "at least some of the terminals of one or more hosts." In other words, it can be understood that an operation related to the host's terminal (130) does not necessarily have to be carried out by all the terminals of the one or more hosts, and is within the scope of the present invention even if it is carried out by only some of the terminals; the same applies in relation to the transmission and reception of information.

The host's terminal (130) provides one or more functions related to provision of a live broadcast by the host. In particular, the host's terminal (130) checks whether to provide the user an opportunity to join the host's live broadcast room; if it is confirmed to provide the user an opportunity to participate in the host's live broadcast room, it checks the user's priority with respect to joining the host's live broadcast room. Based on the priority, the host's terminal (130) then determines whether the user will participate in the live broadcast room; if so, it provides one or more contents associated with the user to viewers of the live broadcast room. In this regard, embodiments vary; checking whether a user will participate in a live broadcast room may comprise an operation of checking whether the user is eligible to participate in the live broadcast room; in some embodiments, however, it may also comprise an operation of checking whether the turn of a user that is eligible to participate has arrived.

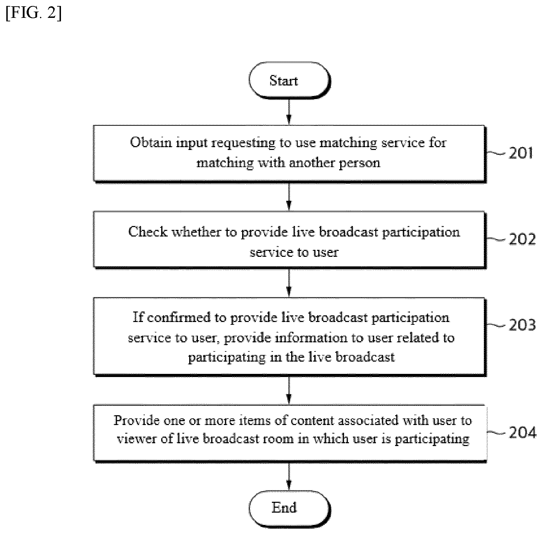

More detailed information regarding the operation of the user's terminal (110), the server (120), and the host's terminal (130) will be described below with reference to FIGS. 2 to 10, etc.

The operations related to a method of providing a series of information according to various embodiments may be implemented by a single physical device, or they may be implemented by organically combining a plurality of physical devices. For example, some of the components comprised within a system that provides information related to a live broadcast may be implemented by any one physical device, while others may be implemented by another physical device. For example, any one physical device may be implemented as part of a user's terminal (110), and another physical device may be implemented as part of a server (120) or as part of another external device.

In some cases, each component comprised within the system that provides information related to live broadcasting may be implemented as being respectively distributed and placed on different physical devices, and these distributed components may be organically combined to carry out the functions and operations of the system that provides information related to the live broadcast. For example, in the present specification, the user's terminal (110) in the comprises at least one sub-device, and one part of the operations that are described as being carried out by the user's terminal (110) may be carried out by the first sub-unit, and another part of the operations may be carried out by the second sub-unit.

FIG. 2 is an operation flowchart illustrating a method by which a terminal of a user provides information related to a live broadcast according to one embodiment.

Referring to FIG. 2, the user's terminal (110) according to one embodiment obtains an input requesting to use a matching service in order to match with another person (201). The user's terminal (110) may obtain an input from the user, via an input device such as a touch screen or the like, that requests use of a matching service. Moreover, input obtained from the user can be obtained in various ways.

In response to an input requesting to use the matching service, the user's terminal (110) checks whether to provide the live broadcast participation service to the user (202). The operation of "providing a live broadcast participation service" may correspond to an operation that does not only make the user join as a viewer of the broadcast, but also allows the user to become part of the broadcast by actively participating in the broadcast. For example, the user's terminal (110) can interact with the host by allowing the user to participate as a guest in the broadcast, and viewers of the broadcast can view the live broadcast in which the user participated.

However, depending on the embodiment, there may be various embodiments related to providing the live broadcast participation service to the user, such as allowing the user's terminal (110) to join the broadcast room as an ordinary viewer. In addition, the user can choose whether to join the broadcast room as an ordinary viewer or instead to actively participate in the broadcast (e.g. as a guest). For example, if a user is admitted to a broadcast room as an ordinary viewer, the user's position may be changed to guest if there is a separate input from the user; conversely, if a user is admitted to participate in a broadcast room as a guest, the user's position may be changed to viewer if there is a separate input from the user.

For convenience of explanation, the description below is based on one embodiment in which the operation of "providing a live broadcast participation service" corresponds to an operation in which a user actively participates in a broadcast and thereby becomes a part of the broadcast; however, the following description can be applied to other embodiments as well.

The operation of checking whether to provide a live broadcast participation service is not limited to an operation in which the user's terminal (110) proactively determines whether to provide the service. For example, according to one embodiment, the user's terminal (110) can receive a result the determination of whether to provide a live broadcast participation service from the server (120) or the host's terminal (130).

For convenience of explanation, the description below focuses on one embodiment in which the server (120) determines whether to provide a live broadcast participation service; however, at least some of the operations of the server (120) described below may also be carried out by a user's terminal (110), the host's terminal (130), or other external devices, and the description below may also be applied analogously to such cases.

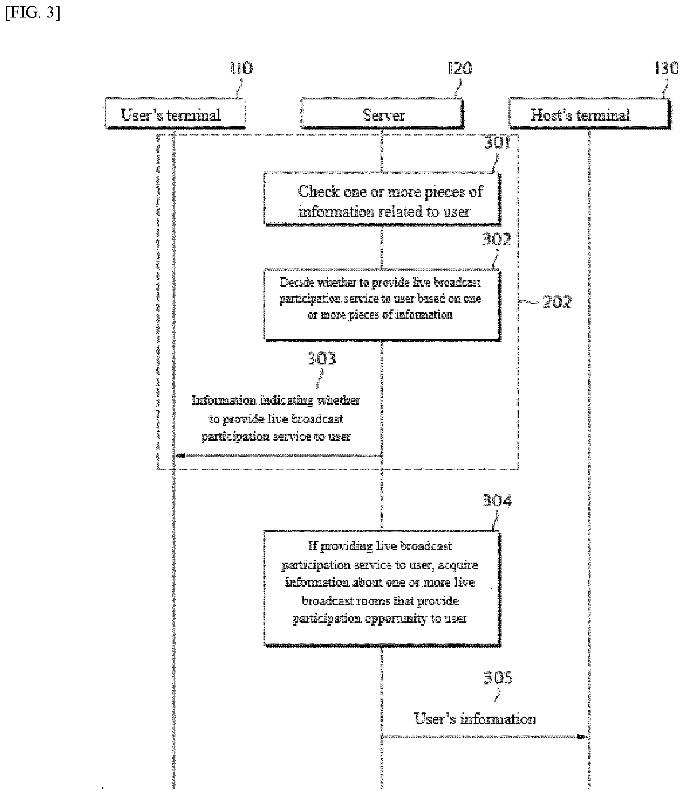

According to one embodiment, the user's terminal (110) can obtain information from the server (120) indicating whether to provide a live broadcast participation service to the user. In this regard, referring also to FIG. 3, the server (120) can check one or more pieces of information related to the user (301), and decide whether to provide the live broadcast participation service to the user based on the one or more pieces of information (302). Depending on the result of deciding whether to provide the live broadcast participation service to the user, the server (120) can provide information indicating whether to provide the live broadcast participation service to the user's terminal (110) (303).

In connection with the operation of reference numeral 301 in the drawings, the one or more pieces of information related to the user may comprise one or more of: information indicating the user's preference with respect to the provision of a live broadcast participation service, and information about the history of the user attempting to match with another person (another matching service user). In this regard, a server (120) according to one embodiment may obtain information indicating the user's preference based on one or more of: history information related to cases in which the live broadcast participation service was provided to the user, and history information related to cases in which it was previously attempted to provide the live broadcast participation service to the user. For example, if the live broadcast participation service has been previously provided to the user, the server (120) may determine that the user prefers the provision of the live broadcast participation service, and if the live broadcast participation service has been previously attempted to be provided to the user but failed (for example due to refusal by the user), the server (120) may determine that the user does not prefer that the live broadcast participation service be provided.

According to one embodiment, the server (120) may determine that the user does not prefer the provision of the live broadcast participation service if one or more of the following is the case: (i) the user has explicitly expressed intention to refuse (which may be associated with the above-described history information), (ii) the user has made a payment in relation to using the matching service, and (iii) the user wishes to be matched only with counterparts that satisfy particular filter conditions such as being a particular gender or a resident of a particular region; if none of the above is the case, the server may determine that the user prefers to be provided the live broadcast participation service. However, this is only an example, and there may be various embodiments for determining the preference of the user. For example, unless the user explicitly manifests consent, the server (120) may assume that the user would not prefer to be provided the live broadcast participation service. By way of another illustrative example, whether a user wants to be matched only with those who meet a particular filter condition may be excluded from consideration when determining whether the user prefers to be offered the live broadcast participation service.

Moreover, various embodiments may fall within the scope of the present invention, such as determining whether to provide a live broadcast participation service by considering one or more of whether the user in question is a monitoring agent, whether matching is currently underway for the user, and whether the user is unsuitable for providing the live broadcast participation service (for example a minor, a resident of a country where the live broadcast service is restricted for legal/policy reasons, etc.).

According to one embodiment, even if the user is not a filter user, the server (120) may estimate the likelihood of the user using the filter based on service usage history (for example, estimating based on the matching success rate), and may take this into consideration in determining the preference of the user for being provided the live broadcast participation service. In addition, the server (120) may determine the preference of the user for being provided the live broadcast participation service by taking into account cases in which the counterpart does not meet the user's preferred conditions even if the user's match itself was successful; for example, if the user is a heterosexual male and has not been matched with a woman, but has been consecutively matched with a man a set number of times, it may be determined that the user will prefer to be provided the live broadcast participation service.

In this regard, in relation to determining whether the user has been "consecutively matched", even if multiple matches are not made in a single time range without interruption in the use of the matching service, if there are no female matched counterparts when the matched counterparts are listed in chronological order, it can be determined that the match has been made with a male counterpart a set number of times in a row (for example, if a match is made with a male counterpart 20 times, the matching ends, the user enters a mirror screen, and then the matching service is used again and a match is made with a male counterpart 10 times, it is determined that a match has been made with a male counterpart 30 times in a row).

However, if the provision of the live broadcast participation service was previously proposed to a user but the user refused it, then subsequently, when determining whether to provide the live broadcast participation service to the user, the conditions related to the preference determination need to be re-evaluated from "the point in time when the provision of the live broadcast participation service was previously proposed but the user declined it." For example, if the user has been matched with a male counterpart 45 times in a row, and the live broadcast participation service is proposed at the 30th consecutive occasion and the user refuses, then when determining whether to provide the live broadcast participation service to the user in the future, the user's preference should be determined by assuming that the user has been matched with a male counterpart 15 times in a row up to that point.

Moreover, there are various embodiments related to preference determination; for example, preference may be determined by considering whether the user will consume the service in the future and the user's satisfaction with the matching service, and the overall criteria for determining preference may be stricter if the user has previously refused to be provided the live broadcast participation service; a particular embodiment does not limit the scope of the present invention.

In this regard, according to one illustrative example, if the user clicked the "Do not ask again" button while receiving the live broadcast participation service in the past, the server (120) may determine that the user has explicitly manifested consent to the live broadcast participation service. And if the user clicked the "Do not ask again" button in the past while refusing to participate in the live broadcast, the server (120) may determine that the user has explicitly manifested the intention to refuse the live broadcast participation service. In the case of this illustrative example, it is possible that the server (120) does not determine that the user has explicitly manifested consent to the provision of the live broadcast participation service on this occasion solely because the user has previously received the live broadcast participation service, and does not determine that the user has explicitly refused to receive the live broadcast participation service on this occasion simply because the user has previously refused to receive the live broadcast participation service.

Information about the user's history of attempting to match with another person may for example comprise how many times the user attempted to match, how many of those attempts were successful, whether a match failure was a refusal by the user or the counterpart, and the like.

According to one embodiment, if it is determined that the user prefers the provision of a live broadcast participation service and if the user's history of attempting to match with others satisfies a set condition (for example, if the user has failed to match 10 or more times in a row, if the user's matching success rate is 20% or less during the last 20 matches, or the like), the server (120) may decide to provide the live broadcast participation service to the user. However, various other embodiments may fall within the scope of the present invention, such that depending on the embodiment, if the user is offered the live broadcast participation service at least a set number of times (for example 3 times) within a set time period (for example within 24 hours, or within the current day) the server (120) may also decide not to provide the live broadcast participation service even if the above conditions are satisfied.

If it is confirmed to provide the live broadcast participation service to the user, the server (120) may obtain information about one or more live broadcast rooms that provide the user an opportunity to participate (304), and may provide information the user's information to the host's terminal (130) (305). In this regard, the operation of providing the user's information to the host's terminal (130) may be understood as an operation of providing the user's information to at least some of the terminals of one or more hosts corresponding to one or more live broadcast rooms that provide the user an opportunity to participate.

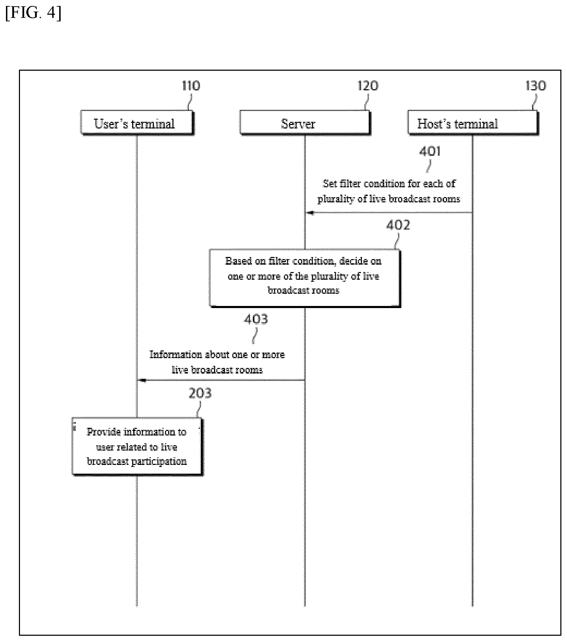

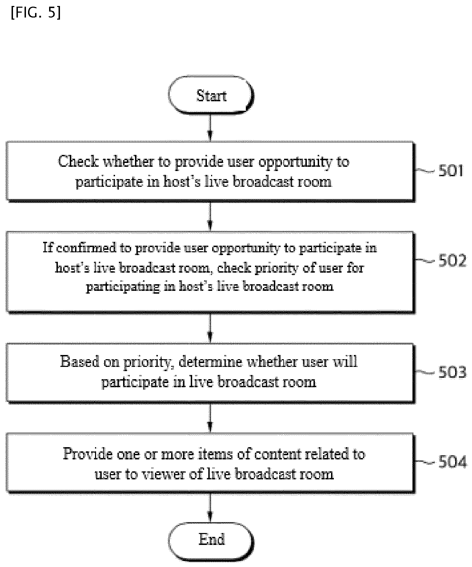

According to one embodiment, associated operations may also be carried out on the host's terminal (130) in relation to the operation of reference numeral 304 for obtaining information about the live broadcast room and the operation of reference numeral 305 for providing the user's information to the host's terminal (130); more detailed descriptions in connection to this will be provided below with reference to FIGS. 4 and 5, etc.

Returning to FIG. 2, if it is confirmed not to provide the live broadcast participation service to the user, the user's terminal (110) may provide the matching service to the user. Here, "provide the matching service" should be understood to mean providing a matching opportunity to the user, and does not necessarily guarantee matching with a counterpart.

If it is confirmed to provide the live broadcast participation service to the user, the user's terminal (110) user provides information to the user related to participating in the live broadcast (203). According to one embodiment, information related to participating in a live broadcast may comprise one or more of: information about one or more live broadcast rooms that provide the user an opportunity to participate, and waiting information of the user with respect to one or more live broadcast rooms. "Provide an opportunity to participate" should be understood to mean that the user is eligible to participate in that room, not that the user can participate immediately.

In some embodiments, the wait of the user may be started by providing information about one or more live broadcast rooms to the user, or the wait of the user may be started for a selected live broadcast room only by receiving the user's selection for at least some of the one or more live broadcast rooms. In one embodiment in which the wait is started by receiving the user's selection, "expected waiting information of the user" may be provided instead of "waiting information of the user" (prior to receiving the user's selection); the content of the information may be substantially similar. Below, for convenience of explanation, the description will be based on "waiting information of the user"; however, it should be understood that the description of "waiting information of the user" can also be applied to "expected waiting information of the user."

Information about the one or more live broadcast rooms may comprise: host information for each live broadcast room, representative image information for each live broadcast room, screen capture information of the live streaming of each live broadcast room, broadcast name information for each live broadcast room, number of viewers for each live broadcast room, and the like. The user's waiting information is information related to how long the user must wait to participate each live broadcast room; there may be various embodiments in which it may comprise information about the number of people (other users) already waiting and information about the expected waiting time and the like; for example in some embodiments people may be excluded who are not immediately able to join the broadcast room when determining the number of people waiting.

Referring further to the illustrative example of FIG. 4, a server (120) according to one embodiment can receive from a host terminal (130) a filter condition set separately for each of a plurality of live broadcast rooms (401). According to one embodiment, such a filter can be set in exchange for payment by the host. The payment by the host need not necessarily be limited to payment charged by the host directly paying costs, and various embodiments may exist, such as for example the host setting a filter using a donation payment received from a viewer, or another viewer purchasing functionality for setting a filter and providing it to the host.

The server (120) can decide on one or more live broadcast rooms among the plurality of live broadcast rooms in which to provide the user an opportunity to participate, based on the filter condition (402). The operation of reference numeral 402 can be understood as one embodiment of the operation of reference numeral 304 in FIG. 3. The filter condition may comprise one or more of: whether the person requesting to use the matching service is allowed to participate in the live broadcast room, and a condition that the person requesting to use the matching service must meet in order to participate in the live broadcast room. The condition that the person requesting to use the matching service must meet in order to participate in the live broadcast room may for example comprise: a condition of residing in a particular region or a condition of being a particular gender; there may be various other embodiments in addition to these.

Whether the person requesting to use the matching service is permitted to participate in the live broadcast room may be determined based on whether the user satisfies filter conditions set for the respective live broadcast room; also, depending on the embodiment, the user's information may be transmitted to the host's terminal (130) so that the host can individually determine whether the user can participate (a detailed description is provided below for FIG. 5); various embodiments related to the present invention may exist.

The server (120) provides information about the one or more live broadcast rooms that have been decided on to the user's terminal (110) (403), and the user's terminal (110) provides information to the user related to participating in the live broadcast (operation of reference numeral 203 in FIG. 2).

However, the illustrative example of FIG. 4 does not limit the scope of the present invention. According to one embodiment, the server (120) may decide on one or more live broadcast rooms that provide the user an opportunity to participate by considering other conditions in addition to the filter conditions, or by considering other conditions instead of the filter conditions. For example, the server (120) may decide on one or more live broadcast rooms by considering a preference of the user, for example, by selecting a live broadcast room that the user may prefer based on the user's country, language, gender, and interests, and the ranking of each host, and may provide the same to the user. In this case, the expression "provides the user an opportunity to participate" may be considered a bit awkward, but it is essentially almost the same in that the user is actually registered in the queue, so it can be understood in a similar context.

By way of a more specific illustrative example, in relation to the one or more live broadcast rooms that provide the user an opportunity to participate, the server (120) may determine the matching suitability of the user and the one or more hosts based on the matching logic of the matching service, on the assumption that the one or more hosts corresponding to the one or more live broadcast rooms have requested to use the matching service (that is, assuming that the host uses the matching service as another user). Based on the matching suitability determined by the server (120), it can decide on the live broadcast room in which the user will participate. In thus determining the matching suitability, the host's filter condition can be considered as described above, and in addition, the user's preference can also be considered.

In thus considering the preference of the user, a logic for recommending a broadcast to view can be used without modification, or a unique logic can be specified for recommending broadcasts to a person who wants to use the matching service.

Returning to FIG. 2 again, the server (120) according to one embodiment can obtain the waiting information of the user. According to a particular illustrative example, the server (120) can obtain the waiting information of the user based on at least some of: the user's priority in relation to participating in the one or more live broadcast rooms; the priority of another person (another user) who is requesting to use the matching service; and the priority of a viewer of the one or more live broadcasts. In this regard, another person or viewer whose priority is subject to consideration may be understood to be a person who has been provided an opportunity to participate in the one or more live broadcast rooms. In some embodiments, such waiting information may be displayed on the screen of the user's terminal (110).

There may be various embodiments regarding the determination of priority. According to one embodiment, assuming that the user is a viewer of one or more live broadcast rooms, the server (120) may determine the user's priority based on a logic for selecting a broadcast participant from among the viewers. In another embodiment, the logic for determining the priority of a viewer and the logic for determining the priority of a person requesting to use the matching service may differ from one another.

The priority determination logic may be a logic that considers the order in which the waiting was started, but is not limited thereto. In other words, depending on the embodiment, there may be a case in which a person who was later to register as waiting can participate in the live broadcast room with priority over a person who registered to wait earlier.

Additionally, depending on the embodiment, the waiting information of the user may be determined based on a different method, instead of considering priority. For example, the server (120) may specify a set of candidate participants in advance for each host or broadcast, and may invite participants to the broadcast in real time based on whether a person belonging to the set of candidates is connected. In addition, various embodiments for determining waiting information may be within the scope of the present invention.

The user's terminal (110) provides one or more contents associated with the user to a viewer of the live broadcast room in which the user is participating (204). The user's terminal (110) may provide content directly to the viewer's terminal; alternatively, it may provide content to the viewer indirectly by providing the content to another device (for example, to the host's terminal (130)).

The one or more contents may for example comprise the user's profile image, name, nickname, and the like, but the scope of the present invention is not limited to a particular type of content.

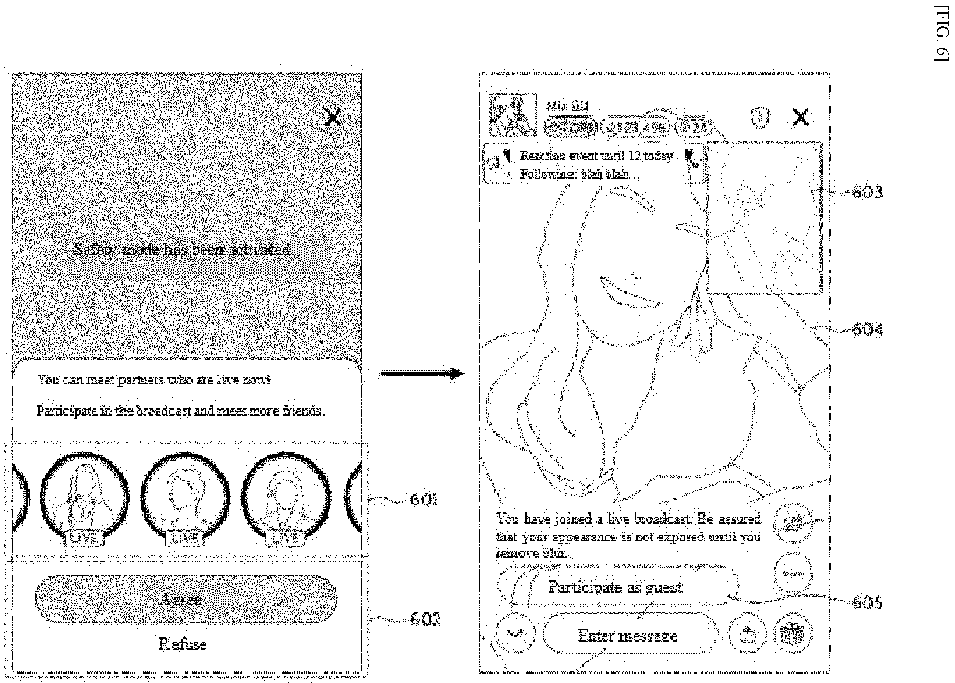

The one or more contents may be provided to the viewer in an altered form, and further, a function to eliminate the alteration may also be provided; more detailed descriptions and illustrative examples related hereto are provided below in reference to FIGS. 6 to 8 and the like.

If the user leaves the live broadcast room, the user may participate in another live broadcast room, or may return to the service of being matched with another person. An exit by the user may be due to a voluntary decision by the user, or alternatively may be due to obtaining information indicating that the user's participation in the live broadcast is not permitted; depending on the embodiment, it may also be based on various other reasons. In addition, there may be various embodiments related to whether the user will participate in another live broadcast room or will return to the service of being matched with another person, such as this being decided based on the user's input or being decided according to the policy direction of the service.

FIG. 5 is an operation flowchart illustrating a method according to one embodiment, whereby information is provided on a terminal of a host.

Referring to FIG. 5, in relation to a user requesting to use a matching service for matching with another person, the host's terminal (130) according to one embodiment checks whether to give the user an opportunity to participate in the host's live broadcast room (501). As described above, the server (120) may determine whether to provide a live broadcast participation service; the host's terminal (130) may receive the result of the determination by the server (120), and check whether to provide the user an opportunity to participate in the host's live broadcast room. At least some of the operations of the server (120) described above with respect to whether to provide the live broadcast participation service may be carried out by the host's terminal (130), and in that case, the above descriptions may also be applied analogously, as described above.

For example, when the host's terminal (130) checks whether to provide the user an opportunity to participate in the host's live broadcast room, instead of transmitting a set filter condition for each of the plurality of live broadcast rooms to the server (120) (i.e., instead of the operation of reference numeral 401 in FIG. 4), the host's terminal (130) may receive the user's information from the user's terminal (110) or from the server (120), and may check whether to allow the user to participate in the broadcast room based on the filter condition. In this way, by determining whether the user will participate in each respective broadcast of one or more hosts, the host's terminal (130) can decide on one or more live broadcast rooms that provide the user an opportunity to participate (in part as described in connection with the operation of reference numeral 402 in FIG. 4, except that the operation is carried out on the host's terminal (130)).

When the server (120) is determining whether to provide a live broadcast participation service (for example, in connection with the operation of reference numeral 302 in FIG. 3), the server (120) according to one embodiment may provide the user's information to the host's terminal (130) (in connection with the operation of reference numeral 305 in FIG. 3), and the host's terminal (130) that has received the user's information may confirm that the user has an opportunity to participate in the host's live broadcast room.

If it is confirmed to provide the user an opportunity to participate in the host's live broadcast room, the host's terminal (130) can check the user's priority with respect to joining the host's live broadcast room (502). As described above, the server (120) may determine the user's priority, and the host's terminal (130) may receive the result of the determination by the server (120) and may check whether to provide the user an opportunity to participate in the host's live broadcast room. At least some of the operations of the server (120) described above with respect to determining the user's priority may be carried out by the host's terminal (130), and in that case, the above descriptions may also be applied analogously, as described above.

In some embodiments, if the user's priority is determined by the server (120), the "user's information" (in connection with the operation of reference numeral 305 in FIG. 3) that the server (120) provides may further comprise information about the user's priority.

"Priority" should accordingly be understood as an illustrative example of information for determining whether a user's turn to participate in the live broadcast room has arrived. In other words, the action of "checking the user's priority" in reference numeral 502 should be understood as comprising various actions of "checking information on which the determination of the user's participation order is based."

Based on the priority, the user's terminal (130) then determines whether the user will participate in the live broadcast room (503), and if the user will participate in the live broadcast room, it may provide one or more contents associated with the user to a viewer of the live broadcast room (504). In some embodiments, the host's terminal (130) may provide one or more contents to a viewer when it is the user's turn to participate in the live broadcast room (even if the user has not participated yet); alternatively, it may provide one or more contents to the user only if the user joins the broadcast room; various other embodiments may also be within the scope of the present invention.

According to one embodiment, if the user participates in the live broadcast, one or more pieces of information related to the user's participation in the live broadcast may be recorded. The entity by which this recording operation is carried out may comprise one or more of: the user's terminal (110), the server (120), and the host's terminal (130); the scope of the present invention is not limited to the recording operation being carried out by a particular entity.

FIG. 6 is a drawing illustrating an example of a screen that provides a live broadcast participation service to a user requesting to use a matching service according to one embodiment.

Referring to FIG. 6, according to one embodiment, if it is confirmed to provide the live broadcast participation service to the user, the user's terminal (110) provides information to the user related to participating in the live broadcast; an illustrative example thereof is shown on the left side of the drawing. The information related to participating in the live broadcast may comprise information about one or more live broadcast rooms that provide the user an opportunity to participate; an illustrative example of this is shown in reference numeral 601. In addition, the information related to participating in the live broadcast may comprise information about an interface for obtaining the user's consent in relation to provision of one or more live broadcast participation services that provide the user an opportunity to participate; an illustrative example of this is shown in reference numeral 602.

The user's consent or refusal can be confirmed via the interface of reference numeral 602. There may be various embodiments, such as, in some embodiments, further providing a "Do not ask again" button to the user, and if the user has clicked the button, determining that the user has manifested explicit consent or explicit refusal in relation to the provision of the live broadcast participation service in the future.

An illustrative example of a screen displayed on the user's terminal (110) when the user participates in the live broadcast room (for example when a user input is received that corresponds to "Agree" in the interface of reference numeral 602) is shown on the right side of the drawing. The user's terminal (110) may provide one or more contents associated with the user to a viewer of the live broadcast room in which the user is participating. According to an illustrative example, the user's terminal (110) may provide to the user (e.g. display on screen) one or more contents that are provided to the viewer, thereby enabling the user to check how the contents about the user are displayed to others (see reference numeral 603). Additionally, information related to the host's live broadcast room (for example, video streamed in real time) may be provided to the user's terminal (110); an illustrative example of this is shown in reference numeral 604.

If the user participates in a live broadcast, at least some of the one or more contents may be altered and provided to viewers of the live broadcast room. "Alteration" may for example comprise masking at least part of the user's name, blurring the user's profile image, modulating the user's spoken voice in real time, and the like. By providing altered content in this way, situations can be prevented in which users' personal information is exposed to multiple viewers. Various embodiments may exist in relation to the subject and timing of the alteration operation; the user's terminal (110) may modify the one or more contents and transmit them to another device (for example a server (120) or the host's terminal (130) or the like); or if the user's terminal (110) provides the contents unaltered, the server (120) or the host's terminal (130) or the like may alter the information and provide it to the viewers; and so forth.

In some embodiments, if a person who requested to use the matching service participates in a broadcast, the associated content may be provided to the viewers in an altered form, but if a viewer participates in the broadcast, linked content may be provided to the other viewers without alteration.

In some embodiments, even if the user is able to participate in the live broadcast room, rather than allowing the user to participate immediately, the user is again asked about intent to participate, and the one or more items of content (for example content corresponding to reference numeral 603) associated with the user are provided to the viewers only after the user's intent to participate has been confirmed once more. In this case, an illustrative example of an interface that asks the user again about the user's intent to participate may be as shown in reference numeral 605. However, even in such a case, the content of reference numeral 603 may be displayed on the user's terminal (110) (because it is not provided to the viewers but is provided for so that the user can check it).

According to one embodiment, the user participating in the broadcast may be provided one or more functionalities for interacting with the host (for example a chat feature for chatting with the host, a video call feature with the host, or the like). In such a case, the functionalities for interacting with the host may be displayed on the user's terminal (110) as an interface or the like. Moreover, various embodiments may fall within the scope of the present invention; for example in some embodiments, the user may first be provided with an interactive functionality and then allowed to participate in the live broadcast only when a subsequent action occurs that satisfies a set condition.

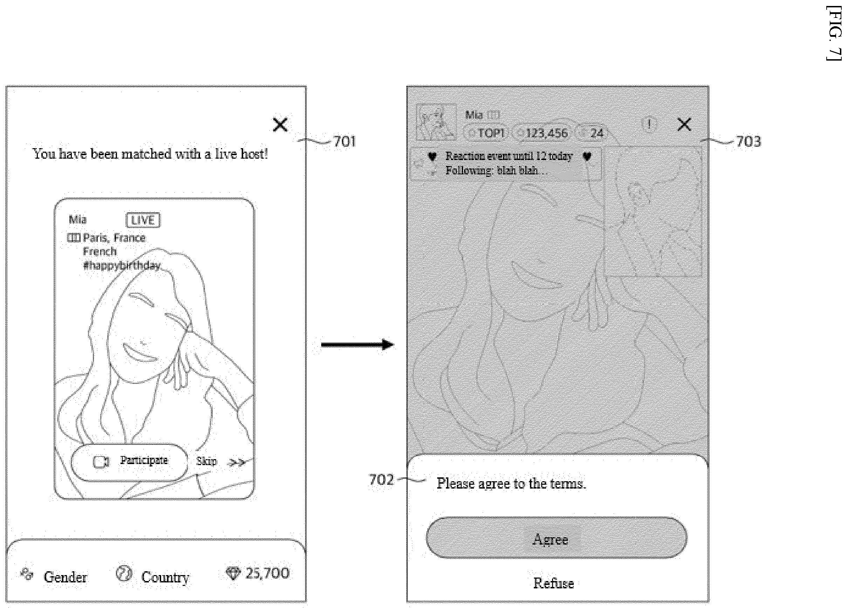

FIG. 7 is a drawing illustrating another example of a screen that provides a live broadcast participation service to a user requesting to use a matching service according to one embodiment.

Referring to FIG. 7, according to one embodiment, if it is confirmed to provide the live broadcast participation service to the user, the user's terminal (110) provides information to the user informing the user that he/she can participate in the live broadcast (which is a type of information related to participation in the live broadcast); an illustrative example thereof is shown in reference numeral 701 on the left side of the drawing.

According to one embodiment, an interface for obtaining the user's consent relating the provision of the live broadcast participation service may be provided on a screen on which the user is participating in the live broadcast room; an illustrative example of this is shown in reference numeral 702 on the right side of the drawing. As to the interface for obtaining the user's consent, there may be various embodiments in relation to the specific method of providing it; for example, as in reference numeral 602, it may be displayed on a screen that provides information to the user related to participating in the live broadcast, or as in reference numeral 702, it may be displayed on a screen on which the user is participating in the live broadcast room.

The user's terminal (110) may display on its screen one or more items of content to be provided to viewers (see reference numeral 703), and the one or more items of content associated with the user may be provided to the viewers only if the user's intent to participate has been confirmed via the interface of reference numeral 702. If the user refuses provision of the live broadcast participation service, typically the user is returned the matching service; however, the scope of the present invention is not limited thereto; and various embodiments may exist; for example, the user may be allowed to participate as a viewer of the live broadcast (or the user may be asked whether he/she is willing to participate as a viewer).

Various embodiments may fall within the scope of the present invention; in some embodiments, altered content may be provided to the viewer even before the user's intent to participate is confirmed, and the viewers may be provided unaltered content after receiving the user's input on the "Agree" button.

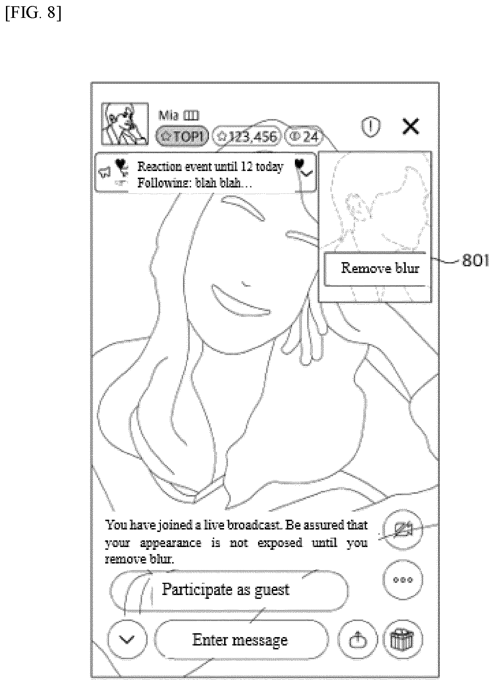

FIG. 8 is a drawing illustrating, by way of example, a case in which an alteration of one or more contents associated with a user is removed and the content is provided to viewers of a live broadcast room, according to one embodiment. The illustrative example shown in FIG. 8 can be understood as display on the screen of the user's terminal (110).

Referring to FIG. 8, when a "set condition" according to one embodiment is satisfied, the alteration of one or more contents may be eliminated, so that the unaltered one or more contents can be provided to viewers of the live broadcast room. In relation to this, the set condition may comprise one or more of: if there is an explicit request by the user, if the viewer satisfies a set criterion, and if another person participating in the live room satisfies a set criterion. Illustrative examples in which there is an explicit request from the user may include user input received for the "Remove Blur" button in reference numeral 801. Illustrative examples in which viewers satisfy a set criterion may include the total amount of payments made by viewers for the user (or for the host) following the user's participation in the broadcast being more than a set criterion amount. Illustrative examples in which another person participating in the live room meet a set criterion may include a competition between a plurality of participants in the live broadcast room resulting in some of the participants winning, as a result of which the alteration of the content associated with the losing participants is removed.

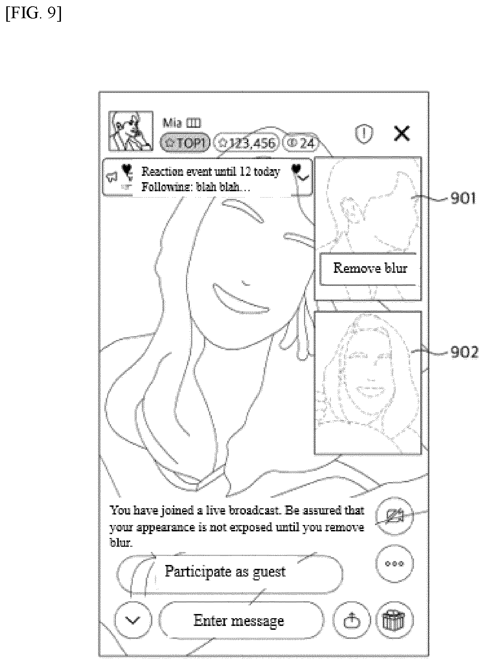

An illustrative example of a plurality of participants participating in the live broadcast is shown in FIG. 9. The illustrative example shown in FIG. 9 can be understood as a display on the screen of the user's terminal (110). Referring further to FIG. 9, in a live broadcast room there may be multiple participation slots; in this case, a plurality of participants can participate in the live broadcast room together by placing a participant in each participation slot. In addition, it is not necessary that a plurality of participation slots be allocated for participants of a single type. In other words, some of the plurality of participation slots according to one embodiment may be allocated for participation by persons requesting to use the matching service, and the remaining slots may be allocated for participation by viewers of the live broadcast room. For example, the participation slot of reference numeral 901 may be allocated for participation by a person who has requested to use the matching service for matching with others, and the participation slot of reference numeral 902 may be allocated for participation by an ordinary viewer.

Each slot, however, does not necessarily have to be rigidly allocated to a particular type of participant, various embodiments may exist, such as for example if the participation conditions are met, a plurality of participants who may all be ordinary viewers or may all have requested to use the matching service for matching with others.

Meanwhile, in the illustrative example of FIG. 9, although there is a "remove blur" button in the content of reference numeral 901, there is no "remove blur" button in the content of reference numeral 902; this may be because the display shown in FIG. 9 is provided to the screen of the user that corresponds to the content of reference numeral 901. However, separately from this, if the person corresponding to the content of reference numeral 902 is an ordinary viewer, content that was never altered in the first place may be provided to other viewers (a related embodiment has been described above).

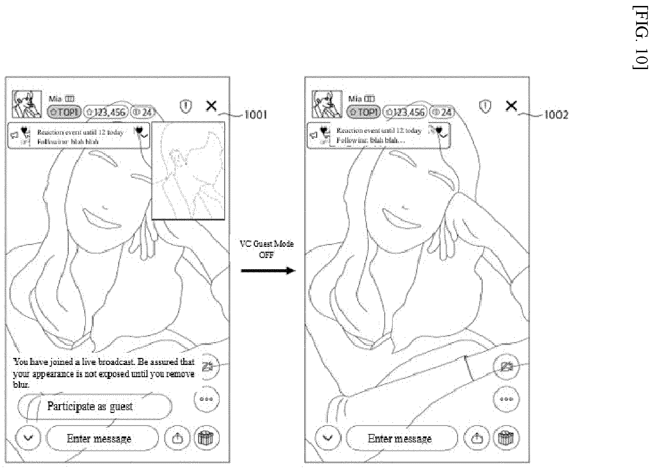

FIG. 10 is a drawing illustrating, by way of example, a case in which information indicating that a user's participation in a live broadcast is not permitted is obtained while the user is participating in the live broadcast, according to one embodiment. The illustrative examples shown on the left and right sides of FIG. 10 may be understood as displays on the screen of the user's terminal (110).

Referring to FIG. 10, as the user (a person who requested to use a matching service for matching with others) is participating in the host's broadcast room according to one embodiment (1001), the host can adjust the broadcast filter condition so as not to permit participation in the broadcast to a person who requested to use the matching service for matching with others ("VC Guest Mode OFF" in the illustrative example shown). In this case, the host's terminal (130) can transmit information indicating that the user's participation in the live broadcast is not permitted to one or more of the server (120) and the user's terminal (110) (if the information is transmitted to the server (120), the server (120) can forward it to the user's terminal (110)). If information is obtained that indicates that the user is not permitted to participate in the live broadcast, the user's terminal (110) can stop providing at least some of the information related to participation in the live broadcast. For example, in the illustrative example of reference numeral 1002, one or more contents associated with the user may no longer be displayed on the user's terminal (110); through this, the user can understand that he/she is no longer participating in the host's broadcast and that the one or more contents associated with the user are no longer being provided to the viewers.

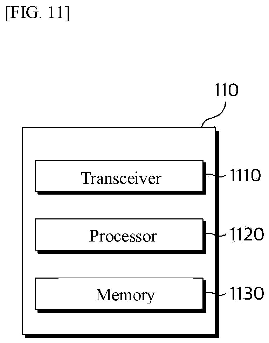

FIG. 11 is an exemplary drawing of a configuration of a terminal of a user according to one embodiment.

Referring to FIG. 11, the user's terminal (110) comprises a transceiver (1110), a processor (1120), and a memory (1130). The user's terminal (110), via the transceiver (1110), may be connected to and exchange data with a server (120), a terminal (130) of a host, and other external devices and the like.

The processor (1120) may comprise at least one of the devices described above with reference to FIGS. 1 to 10, or may carry out at least one of the methods described above with reference to FIGS. 1 to 10. The memory (1130) may store information for carrying out at least one of the methods described above with reference to FIGS. 1 to 10. The memory (1130) may be a volatile memory or a non-volatile memory.

The processor (1120) may control the user's terminal (110) in order to execute a program and provide information. The code of the program executed by the processor (1120) may be stored in the memory (1130).

In addition, the user's terminal (110) according to one embodiment may further comprise an interface that may provide information to the user.

The present specification and drawings disclose preferred embodiments of the present invention; although particular terms have been used, they have been used only to easily explain the technical content of the present invention and in a general sense so as to assist in understanding the present invention, and are not intended to limit its scope. In addition to the embodiments disclosed herein, it will be apparent to a person of ordinary skill in the art to which the present invention pertains that other modifications based on the technical idea of the present invention are possible.

The server, electronic device, or terminal recommended according to the above-described embodiments may comprise: a processor, a memory for storing and executing program data, a permanent storage such as a disk drive, a communication port that communicates with an external device, a touch panel, a key, a user interface device such as a button, or the like. Methods that are implemented as software modules or algorithms may be stored on a computer-readable recording medium as computer-readable codes or program commands that can be executed by the processor. Computer-readable recording media include magnetic storage media (for example read-only memory (ROM), random-access memory (RAM), floppy disks, hard disks, and the like) and optical reading media (for example CD-ROM, Digital Versatile Disc (DVD)), and the like. The computer-readable recording medium is distributed in computer systems connected via a network so that computer-readable codes may be stored and executed in a distributed manner. The medium is readable by a computer, and may be stored in the memory and executed by the processor.

The present embodiment may be represented by functional block configurations and various processing steps. Such functional blocks may be implemented as any number of various hardware and/or software configurations that execute the particular functions. For example, the embodiment may use integrated circuit configurations, such as memory, processing, logic, look-up tables, and the like, that may execute various functions under the control of one or more microprocessors or other control devices. Similarly to how the components may be implemented as software programs or software elements, the present embodiment may be implemented in a programming or scripting language such as C, C++, Java, assembler, Python, or the like, comprising various algorithms implemented as a combination of data structures, processes, routines or other programming constructs. Functional aspects may be implemented as algorithms executed on one or more processors. Additionally, the present embodiment may use conventional techniques for electronic environment settings, signal processing, and/or data processing and the like. Such terms as "mechanism," "element," "means," and "configuration" can be used broadly and are not limited to mechanical and physical configurations. The above terms may encompass the meaning of a series of software processes (routines) in connection with a processor or the like.

The above-described embodiments are only an illustrative example, and other embodiments may be implemented within the scope of the claims set forth below.

## Claims

1. Method of providing information from a terminal of a user, comprising:
a step in which an input is obtained requesting to use a matching service for matching with another person;
a step in which, in response to the input requesting to use the matching service, it is checked whether to provide a live broadcast participation service to the user; and
if it is confirmed to provide the live broadcast participation service to the user,
a step in which information is provided to the user related to participation in a live broadcast; and
a step in which one or more items of content associated with the user are provided to a viewer of a live broadcast room in which the user is participating.

2. Method of providing information according to Claim 1,
wherein the step in which it is checked whether to provide the live broadcast participation service to the user comprises:
a step in which information is obtained from a server indicating whether to provide the live broadcast participation service to the user;
and wherein the server checks one or more pieces of information related to the user, and based on the one or more pieces of information, it is decided whether to provide the live broadcast participation service to the user.

3. Method of providing information according to Claim 2,
wherein the one or more pieces of information related to the user
may comprise one or more of:
information indicating the user's preference related to the provision of the live broadcast participation service, and
information about the user's history of attempting to match with another user.

4. The method of providing information according to Claim 3,
wherein information indicating the user's preference may be obtained based on one or more of:
history information related to cases in which the live broadcast participation service was previously provided to the user; and
history information related to cases in which it was previously attempted to provide the live broadcast participation service to the user.

5. The method of providing information according to Claim 1,
wherein the information related to participating in the live broadcast
may comprise one or more of:
information about one or more live broadcast rooms that provide the user an opportunity to participate; and
information about the user's wait for the one or more live broadcast rooms.

6. The method of providing information according to Claim 5,
wherein the server checks a filter condition that is set for each of the plurality of live broadcast rooms in relation to participation in the broadcast room by the person requesting to use the matching service, and
based on the filter condition, the server decides on one or more live broadcast rooms from among the plurality of live broadcast rooms.

7. The method of providing information according to Claim 6,
wherein the filter condition
may comprise one or more of:
whether the person requesting to use the matching service is allowed to participate in the live broadcast room; and
a condition that the person requesting to use the matching service must satisfy in order to participate in the live broadcast room.

8. The method of providing information according to Claim 6,
wherein the functionality to set the filter condition in exchange for payment
may be provided to the host of the live broadcast room.

9. The method of providing information according to Claim 5, wherein
the information about the user's wait may be obtained from the server based on at least some of: the user's priority in relation to participating in the one or more live broadcast rooms; the priority of another person requesting to use the matching service; and the priority of a viewer of the one or more live broadcasts.

10. The method of providing information according to Claim 9,
wherein, on the assumption that the user is a viewer of the one or more live broadcast rooms, the server determines the user's priority based on a logic for selecting a broadcast participant from among the viewers.

11. The method of providing information according to Claim 5,
wherein, with respect to a particular live broadcast room among the one or more live broadcast rooms, if there are a plurality of participation slots associated with the particular live broadcast room,
some of the plurality of participation slots are allocated for participation by persons requesting to use the matching service, and the remaining slots are allocated for participation by viewers of the particular live broadcast room.

12. The method of providing information according to Claim 5,
wherein the step in which information related to participating in the live broadcast is provided comprises
a step in which functionality is provided for interacting with a host of the one or more live broadcast rooms.

13. The method of providing information according to Claim 1,
wherein in relation to one or more live broadcast rooms that provide the user an opportunity to participate,
on the assumption that one or more hosts corresponding to each of the one or more live broadcast rooms request to use the matching service, the server determines a matching suitability between the user and the one or more hosts based on a matching logic of the matching service, and
based on the matching suitability, the server decides on a live broadcast room in which the user will participate.

14. The method of providing information according to Claim 1,
further comprising a step wherein, if information indicating that the user's participation in the live broadcast is not permitted is obtained during the user's participation in a live broadcast,
provision of at least some of the information related to participation in the live broadcast is stopped.

15. The method of providing information according to Claim 1,
further comprising a step wherein if the user is participating in a live broadcast,
one or more pieces of information related to the user's live broadcast participation are recorded.

16. The method of providing information according to Claim 1,
wherein if the user is participating in the live broadcast, at least some of the one or more contents are provided to viewers of the live broadcast room in an altered form.

17. The method of providing information according to Claim 16,
wherein, if a set condition is satisfied, the alteration is removed, and the one or more contents are provided to viewers of the live broadcast room in unaltered form;
and wherein the set condition may comprise one or more of: whether there is an explicit request from the user, whether the viewer satisfies a set criterion, and whether another person who has participated in the live room satisfies a set criterion.

18. Non-transitory computer-readable recording medium whereon is recorded a program for carrying out the method of Claim 1 in a computer.

19. Terminal of a user that provides information,
comprising a transceiver, a memory that stores commands, and a processor; wherein the processor:
is connected to the transceiver and the memory,
obtains input requesting to use a matching service for matching with another person;
in response to the input requesting to use the matching service, checks whether to provide a live broadcast participation service to the user;
and if it is confirmed to provide the live broadcast participation service, provides information related to participation in the live broadcast to the user, and provides one or more items of content associated with the user to a viewer of a live broadcast room in which the user is participating.

20. Method of providing information from a server, comprising:
a step in which, in relation to a user requesting to use a matching service for matching with another person, it is checked whether to provide a live broadcast participation service to the user;
a step in which if it is confirmed to provide the live broadcast participation service to the user, information is obtained about one or more live broadcast rooms that provide the user an opportunity to participate;
and a step in which, in relation to one or more hosts corresponding to one or more live broadcast rooms, information about the user is provided to at least some terminals of the one or more hosts.

21. Method of providing information from a terminal of a host, comprising:
a step in which: with respect to a user requesting to use a matching service for matching with another person, it is checked whether the user will be provided an opportunity to participate in a live broadcast room of the host;
a step in which, if it is confirmed that the user will be provided an opportunity to participate in the live broadcast room of the host, a priority of the user is checked with respect to participating in the live broadcast room of the host;
a step in which it is determined, based on the priority, whether the user will participate in the live broadcast room; and
a step in which, if the user participates in the live broadcast room, one or more items of content associated with the user are provided to a viewer of the live broadcast room.
